Europäisches Patentamt

European Patent Office

Office européen des brevets

(19)

(11) **EP 1 304 815 A2**

(12) **EUROPEAN PATENT APPLICATION**

(43) Date of publication:
**23.04.2003 Bulletin 2003/17**

(51) Int Cl.$^7$: **H04B 1/707**

(21) Application number: **02256949.5**

(22) Date of filing: **08.10.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (72) Inventor: **Liang, Ying-Chang**<br>**Singapore 120301 (SG)** |
| (30) Priority: **17.10.2001 US 981531** | (74) Representative: **Potter, Julian Mark**<br>**D. Young & Co.,**<br>**21 New Fetter Lane**<br>**London EC4A 1DA (GB)** |
| (71) Applicant: **The National University of Singapore**<br>**Singapore 119260 (SG)** | |

(54) **A code division multiple access downlink receiver**

(57)    A code division multiple access downlink receiver is disclosed for providing wireless communication between a base station and a mobile station in which the receiver is implemented. The receiver comprises a cell searcher for receiving at least one signal from the base station and retrieving therefrom a common code relating to a cell, and a code generator for generating a set of common and dedicated codes relating to at least one communication channel using the output of the cell searcher. The receiver also comprises a path searcher for receiving the at least one signal and performing a search for multiple paths by which the at least one signal arrives at the receiver, and a canceller for canceling data in the at least one communication channel from the at least one signal based on the output of the code generator and path searcher.

**FIG. 6**

**Description**

**Field Of Invention**

The present invention relates generally to wireless communications systems, and more particularly to wireless communications receivers in code division multiple access (CDMA) systems.

**Background**

Wireless communications systems are becoming the preferred choices for the provision of transmission services for digital voice, video and data. Code division multiple access (CDMA) technology is one of the effective wireless access technologies for supporting variable and high data rate transmission services. As an example, wideband CDMA (WCDMA) is adopted in the standardization of the third generation partnership project (3GPP).

It is therefore envisaged that there is substantial business potential in the provision of Internet services through wireless communications. In the wireless Internet domain, most of the data is transferred from a base station (BS) to a mobile station (MS), thus making downlinks the dominant traffic link in the wireless Internet domain. This situation is also true of other data transmission applications, e.g., wireless multimedia communications. Therefore, it is important that the performance of downlinks in wireless communications systems, in particular CDMA-based systems, is improved.

In the downlinks of CDMA-based systems, all mobile stations within the same cell or sector use the same frequency bands and time slots but different spreading codes for data transmission. Spreading codes consist of two layers of codes, namely long scrambling and short channelization codes. The long scrambling codes are common codes assigned to all mobile stations within the same cell or sector. However, the mobile stations are allocated unique short channelization codes which are dedicated codes orthogonal to each other. To support multi-data rate transmissions in CDMA-based systems, two spreading methods may be used, namely the multi-code (MC) and orthogonal variable spreading factor (OVSF) methods.

Communication channels allocated to the mobile stations are referred to as downlink traffic channels (DTCHs), through which data symbols intended for the respective mobile stations are conveyed. In order to establish and maintain the connections between the base stations and mobile stations, common channels, namely a common pilot channel (CPICH) and a common control channel (CCPCH), are also allocated to each cell or sector for conveying the relevant information shared by all the mobile stations within the same cell or sector. The data symbols conveyed by DTCHs, CPICH and CCPCH are orthogonally spread using spreading codes into data-bearing spread signals, then synchronously multiplexed, and finally transmitted through the same physical medium as a transmitted signal. In multi-data rate transmissions, the orthogonality among the spreading codes for low- and high-data rate DTCHs and the CPICH and CCPCH is maintained.

Since the information conveyed by CPICH and CCPCH is intended for and used by all mobile stations in the same cell or sector, the data symbols transmitted by these common channels are therefore detectable by all these mobile stations. On the other hand, the information conveyed by a particular DTCH is only intended for a particular mobile station. Pre-processing technology, such as downlink beamforming technology being applied at the base stations, may be used to ensure that the spread signal in a DTCH is transmitted to a mobile station to which the DTCH is dedicated while limiting any interference pollution which affects the other mobile stations.

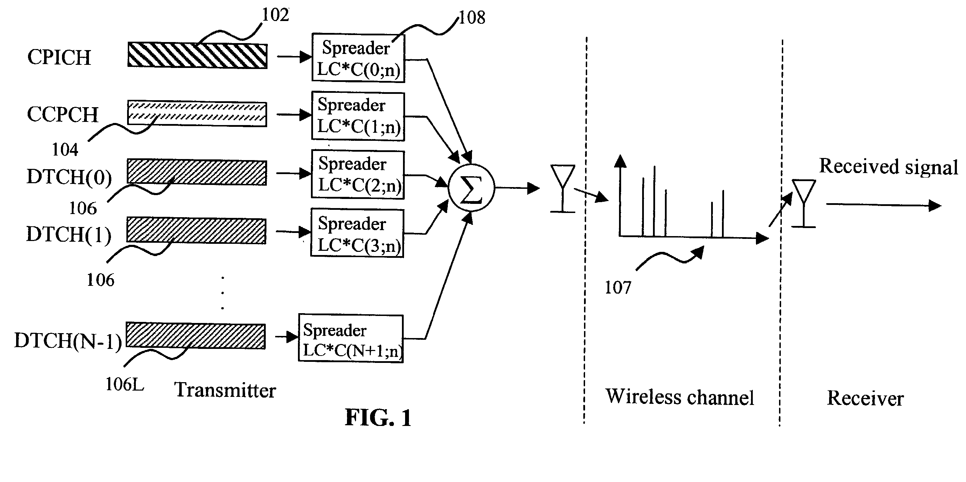

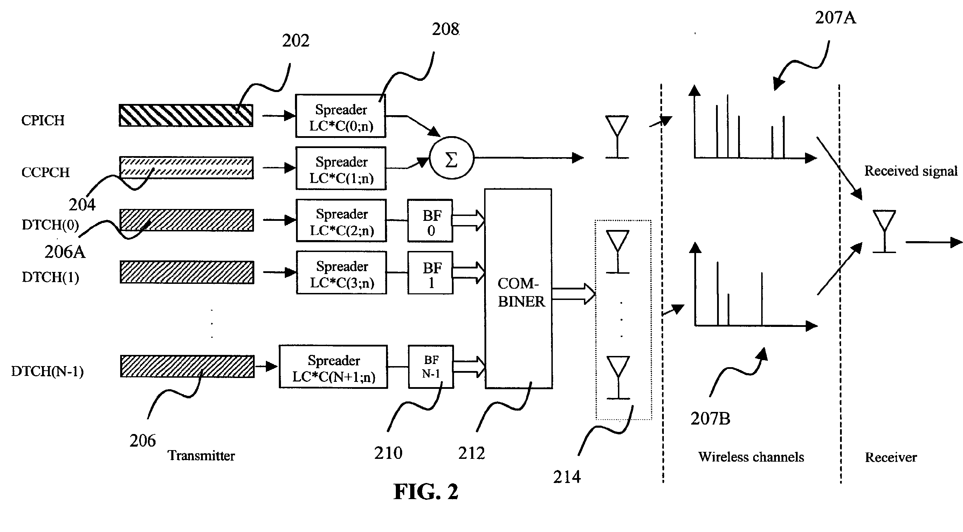

FIG. 1 shows a block diagram of a conventional CDMA downlink transmission system, in which all downlink spread signals in the common channels CPICH 102 and CCPCH 104, and the various dedicated channels DTCHs 106 are summed and transmitted as a transmitted signal through the same wireless channel 107. This transmitted signal is then received by the respective mobile stations as a received signal using a CDMA receiver. FIG.2 illustrates a block diagram of another conventional CDMA downlink transmission system in which the spread signals in the common channels CPICH 202 and CCPCH 204 are summed and transmitted as one transmitted signal through a wireless channel 207A, while the spread signal in a dedicated channel DTCH 206, for example DTCH(0) 206, arrives at a corresponding CDMA receiver separately as another transmitted signal through a wireless channel 207B because of the use of a beamformer BF(0). In spreader units 108 and 208 of both CDMA downlink transmission systems shown in Figs.1 and 2, respectively, spreading processes are carried out in which long scrambling codes (LC), which are common for all mobile stations within the same cell or sector, and short orthogonal codes ($C(k;n)$), each of which is unique to each $k$th communication channel, are multiplied with data symbols to be transmitted in the respective communication channels to form the respective spread signals. In the CDMA downlink transmission system of FIG.2, each DTCH 206 is assigned a dedicated downlink beamformer in which the corresponding spread signal is multiplied with a beamforming weight consisting of a complex number. The different beamforming weights are chosen such that the spread signal in each DTCH 206 is transmitted to each corresponding mobile station while limiting any interference pollution to the other mobile stations. The beamformer outputs from each DTCH 206 are then combined by a combiner 212, the outputs of which are then transmitted using multiple antenna elements 214. With the addition of downlink beamformers, each DTCH 206 spread signal arrives at a CDMA receiver in the corresponding mobile station through a different wireless channel. For example, a wireless channel 207B provides the transmission medium by which the spread signal corresponding to DTCH(0) 206A is transmitted from the base station to the CDMA receiver.

There may be many tall obstacles such as buildings and hills situated between the base station and a mobile station, and a wireless channel is therefore well modeled as a wide-sense stationary uncorrelated scattering (WSSUS) channel. In the CDMA downlink transmission system shown in FIG.1, a transmitted signal arrives at a mobile station together with several time-delayed, amplitude-scaled variants of the transmitted signal which travel along multiple paths in the wireless channel. The CDMA receiver resolves the multipath wireless channel into several paths which convey these multipath signals known as rays, the time delays of which are multiples of a spread signal chip interval $T_c$, and each ray is subject to statistically independent Rayleigh fading. The resolved ray with time delay r represents a group of multipath signals with time delays over an interval $[\tau - T_c/2, \tau + T_c/2]$. If there is only one resolved ray, a frequency non-selective fading channel is observed. However, if there is more than one resolved ray, the wireless channel is called a frequency selective fading channel. A conventional CDMA receiver in the mobile station employs a Rake combiner to coherently combine the despread outputs obtained from the delayed rays determined by a path searcher.

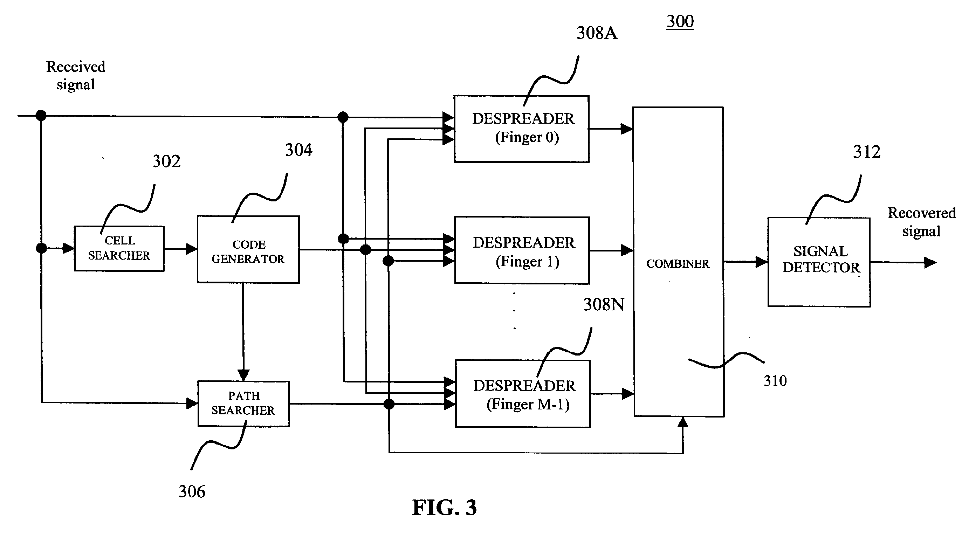

FIG.3 illustrates a block diagram of a conventional Rake receiver 300 in a mobile station for CDMA downlink reception. The Rake receiver 300 includes a cell searcher 302, a code generator 304, a path searcher 306, a number of despreaders 308A to 308N, a combiner 310, and a signal detector 312.

In the Rake receiver 300, the cell searcher 302 receives a received signal and any corresponding ray from a CDMA base station, and retrieves therefrom long scrambling codes relating to a cell or sector in which the Rake receiver 300 operates, and parameters relating to cell and frame synchronization. A typical parameter relating to frame synchronization is, for example, time delay information relating to the first resolved ray. The code generator 304 by using the long scrambling codes retrieved by the cell searcher 302 generates a combination of long scrambling codes and short channelization codes known as spreading codes, relating to the common channels CPICH, CCPCH and the DTCH dedicated to the mobile station. The path searcher 306 then using data symbols intended for the CPICH, the long scrambling and short channelization codes, and the received signal, provides the time delay parameters of several rays with largest received powers known as selected rays. The despreaders 308A to 308N then despread the received signals on a ray-by-ray basis using the retrieved spreading code allocated to the mobile station and the time delay parameters obtained by the path searcher 306. In the combiner 310, the despread output corresponding to each selected ray relating to the received signal is time-aligned using the time delay parameters obtained by the path searcher 306, and then coherently combined with the aid of channel estimates for each ray obtained from pilot symbols embedded in the corresponding DTCH or CPICH. The signal detector 312 then recovers from the output of the combiner 310 the data symbols in the mobile station.

There are several disadvantages associated with a conventional Rake receiver in a mobile station for CDMA downlink reception. Firstly, inter-finger interference (IFI) due to multipath propagation and multiple access interference (MAI) due to other mobile stations are inherent in the Rake receiver. Secondly, when power control is applied in CDMA downlink systems involving the Rake receiver, the average transmitted power of transmitted signals to mobile stations within the same cell or sector is required to be the same, no matter whether the mobile stations are close to or far away from the base station. This causes high inter-cell interference, and degrades the multi-cell capacity for CDMA downlink systems. On the other hand, the performance of the Rake receiver also depends on the accuracy of the path searcher in the Rake receiver. If the path searcher does not give a good estimation of selected rays, the performance of the Rake receiver degrades significantly.

For CDMA downlink transmissions, IFI and MAI are essentially caused by a wireless channel with a large delay spread, which is termed as a frequency selective fading channel. In order to improve the performance of CDMA downlink transmissions, receivers that provide for suppression of IFI and MAI are needed. Because transmitted signals intended for mobile stations are synchronously multiplexed and the channelization codes are orthogonal, and if the wireless channel is a frequency non-selective fading channel, data symbols may be recovered at the mobile stations free of IFI and MAI using a simple despreader. When the delay spread is large, a frequency selective fading channel may be transformed into a frequency non-selective fading channel through channel equalization. Therefore, channel equalization methods may be used to restore the orthogonality of the DTCH, CPICH and CCPCH spreading codes, and to suppress IFI and MAI.

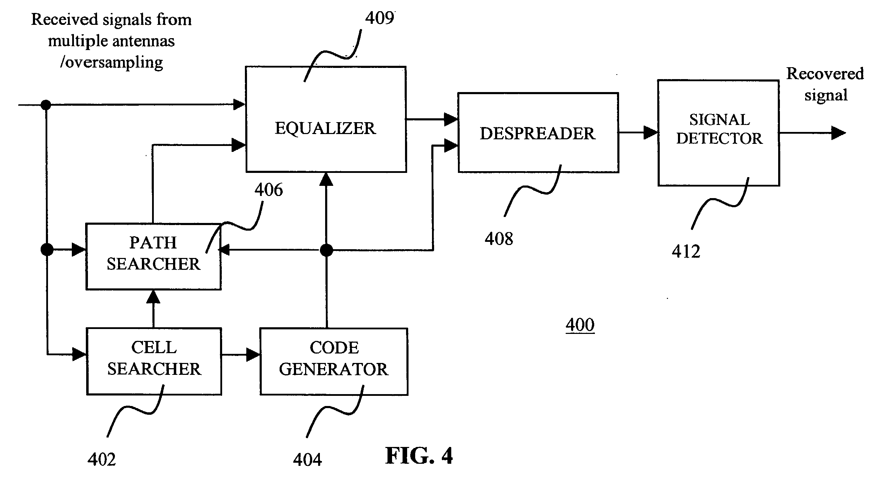

FIG.4 shows a block diagram of a conventional equalization receiver 400 in a mobile station for CDMA downlink transmission. The conventional equalization receiver 400 includes a cell searcher 402, a code generator 404, a path searcher 406, a despreader 408, an equalizer 409, and a signal detector 412.

In the equalization receiver 400, the cell searcher 402 receives from a CDMA downlink system received signals using multiple antennas that may employ oversampling and any corresponding rays, and retrieves therefrom long scrambling codes relating to a cell or sector in which the equalization receiver 400 operates, and parameters relating to cell and frame synchronization. The code generator 404 using the long scrambling codes retrieved by the cell searcher 402, generates a combination of long scrambling and short channelization codes known as spreading codes relating to the common channels CPICH, CCPCH and the corresponding DTCH required by the equalizer 409. The path searcher 406 then using the data symbols intended for the CPICH, the long scrambling and short channelization codes, and the received signals, provides the time delay parameters of several rays with largest received powers.

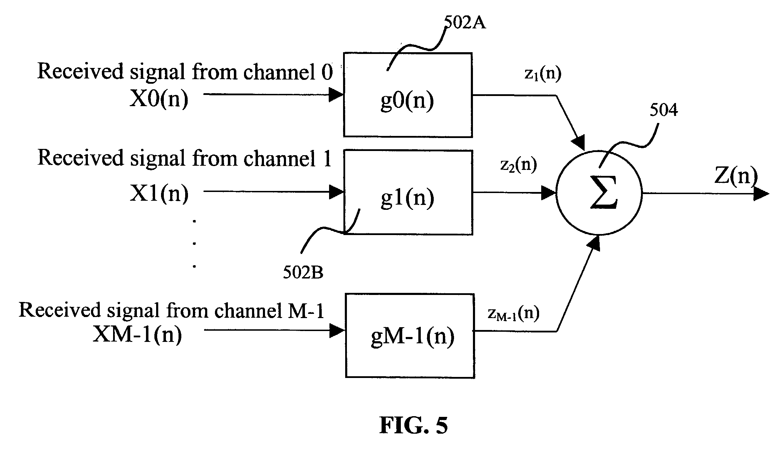

The equalizer 409 is described in greater detail with reference to FIG. 5, where there are $M$ physical channels obtained using multiple receiver antennas that may employ oversampling, each channel having a linear finite impulse response (FIR) $h_j(n)$ with maximum delay with $L$ sampling intervals. For example, $M = 4$ physical channels may be achieved via four receiver antennas without over-sampling , or via two receiver antennas, each of which employs 2-times over-sampling.

In the equalizer 404, there are $M$ linear FIR filters 502, $g_j(n)$, each corresponding to a physical channel with response $h_j(n)$. During operation, a received signal received via a physical channel $j$ is passed to into a corresponding FIR filter 502 of length $Q$ thereby producing a filtering output. A signal combiner 504 then sums the output from each FIR filter 502, generating a signal $z(n)$ for further processing by the despreader 408. Equalizer coefficients used in the equalizer 409 may be obtained, for example by minimizing the difference, using the minimum mean-square-error (MMSE) method, between the overall equalization output $z(n)$ and delayed variant of the received signal, $x(n - u),$ where $u$ is known as a reference timing. The path searcher 406 provides the reference timing required by the equalizer 409 during operation.

The despreader 408 then despreads the output of the equalizer 409 using the spreading codes allocated to the mobile station. The signal detector 412 then recovers from the output of the despreader 408 data symbols intended for the mobile station.

Generally, two kinds of equalization methods have been proposed, namely chip equalization and symbol equalization methods. The chip equalization methods include the ideal chip zero-forcing (ZF) equalizer and MMSE equalizer methods. These methods seek to recover the transmitted signal intended for a mobile station, and thus are required to work well in low signal-to-noise ratio (SNR) environments, especially for highly loaded CDMA downlink systems. The Griffth's algorithm, which is a modification of the least-mean-square (LMS) algorithm, is used to recover overall transmitted signals. Even though this method relates to a higher working SNR, the performance thereof, however, depends on how good the channel estimates are. When downlink beamforming is applied at the base stations, the spread signal in the CPICH is transmitted through a physical channel different from another physical channel transmitting the spread signal intended for the corresponding DTCH. Thus channel estimates based on the spread signal in the CPICH are not applicable. On the other hand, the channel estimates based on the mobile station's dedicated pilot symbols are not accurate when the transmitted power for the mobile station's corresponding DTCH is much weaker than the others. As a result, there is limited application of Griffth's algorithm in CDMA downlink systems.

The symbol equalization method is based on the minimization/maximization (Mini-Max) equalization technique, which makes use of the spreading codes allocated to a mobile station and other which are unused spreading codes in a cell or sector. The Mini-Max technique is based on the criterion that with perfect ZF equalization, despreading using the mobile station's spreading codes should recover the mobile station's data symbols, while the result of despreading using the unused spreading codes should be null. Therefore, such a technique involves the generation of equalization coefficients by minimizing the total power of despread outputs based on the unused spreading codes, and maximizing the power of the despread output based on the mobile station's spreading codes. This technique is limited in application when the mobile station is not provided with information relating to the unused spreading codes, and when the CDMA downlink system is fully loaded and therefore there are no unused spreading codes. On the other hand, the performance of this method depends on the strength of the transmitted signal intended for the mobile station in comparison with the transmitted signals intended for the other mobile stations. In fact, the performance degrades significantly when the transmitted signal intended for the mobile station is weaker than the transmitted signals intended for the other mobile stations.

Alternatively, an adaptive symbol equalizer is proposed, which applies the minimum mean-square-error (MMSE) optimization criterion and uses the data symbols intended for the CPICH as a reference signal. The adaptive symbol equalizer updates equalizer coefficients by minimizing the difference between the equalization outputs and the CPICH data symbols using the optimization MMSE criterion, and equalizes the transmitted signal intended for the DTCH corresponding to a mobile station using the same equalizer coefficients. This method is conceptually applicable for time-varying environments. However, when downlink beamforming technology is employed in the base station, the data symbols in the CPICH and DTCH are transmitted through different physical channels. As a result, the optimal MMSE equalizer coefficients for the data symbols in the CPICH are theoretically different from those for the data symbols in the DTCH. On the other hand, when transmission diversity is applied, the CPICH employs a different transmission diversity method from the other downlink physical channels, and therefore this further shows that using the data symbols in the CPICH as reference signals for updating the equalization coefficients is not a practical solution for DTCHs.

There is therefore clearly a need for improved receivers such as Rake and equalizer receivers for CDMA downlink transmission for addressing the foregoing problems or disadvantages inherent in conventional Rake or equalizer receivers or methods therefor, and in particular, for achieving power savings, capacity enhancement, and throughput increment for CDMA downlink transmission.

## Summary

In accordance with a first aspect of the invention, a code division multiple access downlink receiver is described for providing wireless communication between a base station and a mobile station in which the receiver is implemented. The receiver comprises a cell searcher for receiving at least one signal from the base station and retrieving therefrom a common code relating to a cell, and a code generator for generating a set of common and dedicated codes relating to at least one communication channel using the output of the cell searcher. The receiver also comprises a first path searcher for receiving the at least one signal and performing a search for multiple paths by which the at least one signal arrives at the receiver, and a canceller for canceling data in the at least one communication channel from the at least one signal based on the output of the code generator and first path searcher.

In accordance with a second aspect of the invention, a code division multiple access downlink reception method is described for providing wireless communication between a base station and a mobile station in which a receiver employing the method is implemented. The method comprises the steps of receiving using a cell searcher at least one signal from the base station and retrieving therefrom a common code relating to a cell, and generating using a code generator a set of common and dedicated codes relating to at least one communication channel using the output of the cell searcher. The method also comprises the steps of receiving using a first path searcher the at least one signal and performing a search for multiple paths by which the at least one signal arrives at the receiver, and canceling using a canceller data in the at least one communication channel from the at least one signal based on the output of the code generator and first path searcher. The method further comprises the steps of receiving using an equalizer the output of the canceller and code generator for equalizing the output of the canceller, and receiving using a despreader the output of the equalizer for despreading the output of the equalizer.

## Brief Description Of The Drawings

The following detailed description is by way of example only and makes reference to the accompanying drawings, which are now briefly described.

FIG. 1 depicts a CDMA downlink transmission system in which the same wireless channel is used for transmission;

FIG. 2 depicts a CDMA downlink transmission system in which different wireless channels are used for transmission;

FIG. 3 shows a block diagram of a conventional Rake receiver;

FIG. 4 shows a block diagram of a conventional equalization receiver;

FIG. 5 shows a block diagram of processing units within an equalizer module of FIG.4;

FIG. 6 shows a Rake receiver applying common pilot/control channel cancellation according to a first embodiment;

FIG. 7 shows a Rake receiver applying common pilot/control channel cancellation according to a second embodiment;

FIG. 8 shows an equalization receiver with common pilot/control channel cancellation according to a third embodiment;

FIG. 9 shows an equalization receiver with common pilot/control channel cancellation according to a fourth embodiment;

FIG. 10 shows a Rake receiver applying common pilot/control channel cancellation according to a fifth embodiment;

FIG. 11 shows an equalization receiver with common pilot/control channel cancellation according to a sixth embodiment;

FIG. 12 shows short channelization codes used in a conventional Mini-Max equalization technique;

FIG. 13 shows short channelization codes used in an improved Mini-Max equalization technique;

FIG.14 shows short channelization codes used in the conventional Mini-Max equalization technique of FIG. 12 employed in the equalization receiver of FIG. 8, 9, or 11;

FIG.15 shows short channelization codes used in the improved Mini-Max equalization technique of FIG. 13 employed in the equalization receiver of FIG. 8, or 9, or 11; and

FIG.16 provides a BER performance comparison for various downlink equalization techniques.

**Detailed Description**

Embodiments of the invention are described hereinafter in consideration of the foregoing need for improved receivers such as Rake and equalizer receivers for CDMA downlink transmission in consideration of the foregoing problems or disadvantages inherent in conventional Rake or equalizer receivers or methods therefor, and in particular, for achieving power savings, capacity enhancement, and throughput increment for CDMA downlink transmission.

Embodiments of the invention include CDMA receiver structures and methods for CDMA downlink transmission, for example Rake receivers with CPICH/CCPCH signal cancellers, equalization receivers with CPICH/CCPCH signal cancellers, and Mini-Max equalization techniques applying CPICH/CCPCH signal cancellation.

The advantages provided are manifold. The CIPCH/CCPCH signal canceller provides a broad spectrum of applications, including applications in Rake receivers and equalization receivers. Other advantages include achievements in power savings, capacity enhancement, and throughput increment in relation to CDMA downlink transmission.

The Mini-Max symbol equalizer with the CPICH/CCPCH signal canceller affords further advantages. Being different from the traditional Rake receiver, which requires almost equal transmitted powers for both near and far mobile stations, the Mini-Max symbol equalizer receivers are applicable when the transmitted power of a transmitted signal intended for a mobile station is much weaker than that required for the transmitted power relating to other mobile stations. Therefore, when the mobile station is close to the base station, the transmitted power for the mobile station may be greatly reduced as compared with the case involving the conventional Rake receiver. Alternatively, by increasing the transmitted power for near mobile stations, high modulation scheme may be used to improve the throughput of the near mobile stations. With the increase of data rate for CDMA downlink transmission, the Mini-Max symbol equalizer receiver is well suited for applications in a "wireless" Internet and a wireless multimedia communications system.

For simplicity and brevity purposes, the embodiments of the invention are described hereinafter in relation to equal rate downlink transmissions. However, this does not preclude the embodiments from being applicable to multi-rate downlink transmissions using MC or OVSF spreading schemes and other multi-rate downlink transmissions.

FIG.1 shows a block diagram of a conventional CDMA downlink transmission system, in which all downlink spread signals in the common channels CPICH 102, CCPCH 104, and various dedicated channels DTCHs 106, are summed and transmitted as a transmitted signal through the same wireless channel 107.

$T_s$ and $T_c$ are denoted as symbol and chip intervals, respectively, in the conventional CDMA downlink transmission system. The processing gain is $G = T_s/T_c$, and there are G sets of orthogonal short channelization codes. If there are N users that share the same cell or sector, then there are $(N+2)$ channels including $N$ DTCHs 106, the CPICH 102 and CCPCH 104. Each channel is allocated a set of short channelization codes.

Let $s_{cp}(k)$ and $s_{cc}(k)$ be modulated symbol-level data symbols, or data symbols embedded in the CPICH 102 and CCPCH 104, respectively. These data symbols convey information to be shared by all mobile stations within the same cell or sector. $s_{cp}(k)$ and $s_{cc}(k)$ are, respectively, spread by the spreading codes, $c_{cp}(n)$, and $c_{cc}(n)$, corresponding to the CPICH 102 and CCPCH 104, respectively, generating the spread chip-level signals, or spread signals, $x_{cp}(n)$, and $x_{cc}(n)$, the values of which are as follows for $n = 0,1,...,$

$$x_{cp}(k_1 G + n_1) = \tilde{x}_{cp}(k_1; n_1), \ \tilde{x}_{cp}(k_1; n_1) = s_{cp}(k_1)c_{cp}(n_1), \ k_1 = 0,1,..., \text{ and } n_1 = 0,...,G-1$$

$$x_{cc}(k_1 G + n_1) = \tilde{x}_{cc}(k_1; n_1), \ \tilde{x}_{cc}(k_1; n_1) = s_{cc}(k_1)c_{cc}(n_1), \ k_1 = 0,1,..., \text{ and } n_1 = 0,...,G-1$$

Let $s_l(k)(l = 0,1,...N-1)$ be the modulated symbol-level data symbols, or data symbols embedded in an $l$th DTCH 106L. These data symbols convey information to be transmitted to a corresponding $l$th mobile station. $s_l(k)$ is spread using the spreading codes, $c_l(n)$, corresponding to the $l$th DTCH, thereby generating the chip-level signals, or spread signal, $x_l(n)$, the values of which are as follows for $n = 0,1,...,$

$$x_l(k_1 G + n_1) = \tilde{x}_l(k_1; n_1) , \ \tilde{x}_l(k_1; n_1) = s_l(k_1)c_l(n_1), \ k_1 = 0,1,..., \text{ and } n_1 = 0,..., G-1$$

The spread signals in the CPICH 102, CCPCH 104 and DTCHs 106 are then summed up to generate the transmitted signal $x(n)$, which is represented by

$$x(n) = \sum_{l=0}^{N-1} x_l(n) + x_{cp}(n) + x_{cc}(n)$$

Since the information conveyed by the CPICH 102 and CCPCH 104 is to be used by all mobile stations in the same cell or sector, the data symbols transmitted by these common channels are detectable by all mobile stations within the same cell or sector. On the other hand, the information conveyed by a specific DTCH is dedicated to the corresponding mobile station only. Pre-processing technology, such as downlink beamforming technology being applied at the base stations, may be used to make sure that the DTCH's spread signal is transmitted to the mobile station while limiting any interference pollution which affects other mobile stations.

FIG.2 illustrates a block diagram of another conventional CDMA downlink transmission system in which spread signals in the CPICH 202 and CCPCH 204 are summed and transmitted as a transmitted signal through a wireless channel 207A, while the spread signal in a particular DTCH 206, for example DTCH(0) 206, arrives at a corresponding CDMA receiver separately as another transmitted signal through a wireless channel 207B because of the use of a beamformer BF(0). In spreader units 108 and 208 of both CDMA downlink transmission systems shown in Figs.1 and 2, respectively, spreading processes are carried out in which long scrambling codes (LC), which are common for all mobile stations within the same cell or sector, and short orthogonal codes ($C(k;n)$), each of which is unique to each $k$th communication channel, are multiplied with data symbols to be transmitted in each $k$th communication channel to form the spread signals. In the CDMA downlink transmission system of FIG.2, each DTCH 206 is assigned a dedicated downlink beamformer in which the corresponding spread signal is multiplied with a beamforming weight consisting of a complex number. The different beamforming weights are chosen such that the spread signal in each DTCH 206 is transmitted to each corresponding mobile station while limiting any interference pollution to the other mobile stations. The beamformer outputs from each DTCH 206 are then combined by a combiner 212, the outputs of which are then transmitted using multiple antenna elements 214. With the addition of downlink beamformers, each DTCH 206 spread signal arrives at a CDMA receiver in the corresponding mobile station through a different wireless channel. For example, a wireless channel 207B provides the transmission medium by which the spread signal corresponding to DTCH(0) 206A is transmitted from the base station to the CDMA receiver.

There may be many tall obstacles such as buildings and hills situated between the base station and a mobile station, and a wireless channel is therefore well modeled as a wide-sense stationary uncorrelated scattering (WSSUS) channel. In the CDMA downlink transmission system shown in FIG.1, a transmitted signal arrives at a mobile station as several time-delayed, amplitude-scaled variants of the transmitted signal along multiple paths in the wireless channel. The CDMA receiver resolves the multipath wireless channel into several paths which convey these multipath signals known as rays, the time delays of which are multiples of a spread signal chip interval $T_c$, and each ray is subject to statistically independent Rayleigh fading. The resolved ray with time delay $\tau$ represents a group of multipath signals with time delays over an interval [$\tau - T_c / 2$, $\tau + T_c/2$]. If there is only one resolved ray, a frequency non-selective fading channel is observed. However, if there is more than one resolved ray, the wireless channel is called a frequency selective fading channel, whose impulse responses may be represented in complex form as:

$$h(t; \tau) = \sum_{m=0}^{M-1} \tilde{\alpha}_m(t)\delta(\tau - \tau_m)$$

where $\tilde{\alpha}_m(t)$ and $\tau_m$ are the path gain and time delay of the $m$th path, respectively, with

$$\sum_{m=0}^{M-1} E\left[\left\|\widetilde{\alpha}_m(t)\right\|^2\right] = 1,$$

is the delta function, and $M$ is the number of resolved rays. The time delay changes relatively slowly, while the path gain changes much faster depending on the changes in the environment, including the mobile station.

The received signal at the receiver may be expressed as a convolution function of the transmitted signal with a discrete wireless channel response. If the channel responses are constant over an observation period, for example one slot, the received signal is represented by

$$y(n) = \sum_{m=0}^{M-1} \alpha_m x(n - p_m)$$

where $p_m = \lfloor \tau_m/T_c \rfloor$ is the maximum integer smaller than $\tau_m/T$.

Without loss of generality, data symbols of the $0^{th}$ DTCH, $s_0(k)$, are defined as the desired signals to be detected by the mobile station.

A conventional CDMA receiver in a mobile station may employ a Rake combiner to coherently combine the despread outputs obtained from delayed rays determined by a path searcher. Typically, a conventional CDMA downlink Rake receiver in a mobile station consists of three major subsystems, namely cell search 302, path search 306, and Rake combiner 310 subsystems. With reference to FIG. 3, these subsystems are described in further details in relation to the mobile station receiving transmitted signals in a CDMA downlink transmission system.

The cell search subsystem 302 performs cell search based on spread signals in synchronization channels, namely a primary-synchronization channel (P-SCH) and a secondary synchronization channel (S-SCH), and the common channel CPICH , in which the spread signals in the P-SCH and S-SCH occupy the first 256 chips in every slot of the common channel CCPCH. Through the cell search subsystem 302, information relation to slot synchronization, frame synchronization and long scrambling codes are obtained. The transmitted powers for the CPICH and CCPCH spread signals are usually higher than that for spread signals intended for a DTCH dedicated to the mobile station in order to achieve fast and accurate cell search.

In some cases, such as when downlink beamforming technology is employed in the base station, the CPICH and DTCH spread signals are transmitted via different wireless channels. As a result, the path search subsystem 306 performs path search based on a dedicated pilot symbol in the DTCH instead of the CPICH. However, because of the transmission strength of transmitted signals for the CPICH, CCPCH and DTCH intended for other mobile stations in the same cell or sector, the accuracy of the path search may be very poor, especially when the transmitted power of the transmitted signal for the intended mobile station is low.

The Rake combiner 310 coherently combines despread outputs from the resolved paths obtained by the path search subsystem 306. Thus the performance of the Rake combiner 310 depends on the accuracy of the path search, as well as the strength of transmission relating to the DTCHs for the other mobile stations and the CPICH and CCPCH.

It is important to note that the CPICH and CCPCH are useful for cell search and detection of a broadcasting channel (BCH) only. Therefore, the spread signals in the CPICH and CCPCH are considered as interference to the path search subsystem 306 and Rake combiner 310.

FIG.4 shows a block diagram of a conventional equalization receiver 400 in a mobile station receiving transmitted signals in a CDMA downlink transmission system. The conventional equalization receiver 400 includes a cell searcher 402, a code generator 404, a path searcher 406, a despreader 408, an equalizer 409, and a signal detector 412.

In the equalization receiver 400, the cell searcher 402 receives from a CDMA downlink system received signals using multiple antennas that may employ oversampling and any corresponding rays, and retrieves therefrom long scrambling codes relating to a cell or sector in which the equalization receiver 400 operates, and parameters relating to cell and frame synchronization. The code generator 404 using the long scrambling codes retrieved by the cell searcher 402, generates a combination of long scrambling and short channelization codes known as spreading codes relating to the common channels CPICH, CCPCH and the corresponding DTCH required by the equalizer 409. The path searcher 406 then using the data symbols intended for the CPICH, the long scrambling and short channelization codes, and the received signals, provides the time delay parameters of several rays with largest received powers.

The equalizer 409 is described in greater detail with reference to FIG. 5, where there are $M$ physical channels obtained using multiple receiver antennas that may employ oversampling, each channel having a linear finite impulse response (FIR) $h_j(n)$ with maximum delay with $L$ sampling intervals. For example, $M = 4$ physical channels may be achieved via four receiver antennas without over-sampling, or via two receiver antennas, each of which employs 2-times over-sampling.

For simplicity, it is assume that M receiver antennas without employing oversampling are used to obtain M physical channels, the received signals of which are described as

$$y_j(n) = x(n) * h_j(n) + w_j(n) = \sum_{p=0}^{L-1} h_j(p)x(n-p) + w_j(n)$$

where "*" denotes the convolution operation, and $w_j(n)$ is the additive white Gaussian noise (AWGN) received at the $j$th antenna.

In the equalizer 409 there are $M$ linear FIR filters 502, $g_j(n)$, each corresponding to a physical channel with response $h_j(n)$. During operation, a received signal received via a physical channel $j$ is passed to a corresponding FIR filter 502 of length $Q$ thereby producing a filtering output $z_j(n)$, where

$$z_j(n) = y_j(n) * g_j(n) = \sum_{p=0}^{Q-1} g_j(p)y_j(n-p)$$

A signal combiner 504 then sums the output from each FIR filter 502, generating a signal $z(n)$ for further processing by the despreader 408. Equalizer coefficients used in the equalizer 409 may be obtained, for example by minimizing the difference, applying the minimum mean-square-error (MMSE) optimization criterion, between the overall equalization output $z(n)$ and delayed variant of the transmitted signal, $x(n - u)$, where $u$ is known as the reference timing. The path searcher 406 provides the reference timing required by the equalizer 409 during operation.

The despreader 408 then despreads the output of the equalizer 409 using the foregoing spreading codes allocated to the mobile station. The signal detector 412 then recovers from the output of the despreader 408 data symbols in the mobile station.

It is also important to note that the CPICH and CCPCH are useful used for cell search and detection of a broadcasting channel (BCH) only. Therefore, the spread signals in the CPICH and CCPCH codes are considered as interference to the path searcher 406 and equalizer 409.

Rake receiver with CPICH/CCPCH signal cancellation

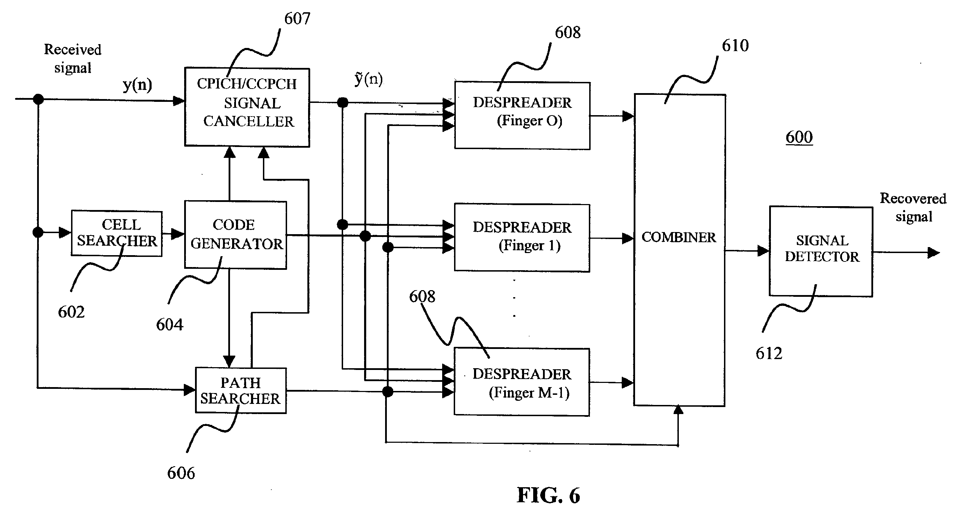

FIG.6 shows a block diagram of a Rake receiver 600 in a mobile station, having a CPICH/CCPCH signal canceller 607 according to a first embodiment of the invention. The Rake receiver 600 consists of two major components, namely the CPICH/CCPCH signal canceller 607, and a Rake combiner 610. Other components include a cell searcher 602, a code generator 604, a path searcher 606, despreaders 608, and a signal detector 612. The path searcher 606 and a channel response estimator in the path searcher 606 or Rake combiner 610 perform path search and channel response estimation, respectively, based on the common channel CPICH in the received signal. Thus the Rake receiver 600 is well suited for applications where spread signals for the common channels CPICH and CCPCH spread are transmitted together with spread signals in the dedicated channel DTCH through the same wireless channel.

A received signal $y(n)$ and any corresponding rays are provided to the cell searcher 602 for processing, the output of which is then processed by the code generator 604. The output of the code generator 604 is in turn processed by the path searcher 606, CPICH/CCPCH signal canceller 607, and despreaders 608. The output of the path searcher 606 is provided to the CPICH/CCPCH signal canceller 607, despreaders 608 and Rake combiner 610. The received signal $y(n)$ is also provided to the path searcher 606 and CPICH/CCPCH signal canceller 607. The cell searcher 602 performs cell search based on the CPICH and CCPCH, and provides parameters relating to slot synchronization, frame synchronization and long scrambling codes. A typical slot synchronization parameter is the time delay $\tau_0$ for the first arrived ray. With the long scrambling codes acquired by cell searcher 602, the code generator 604 then generates a combination of long scrambling codes and short channelization codes, or spreading codes, for the CPICH and CCPCH and the DTCH dedicated to the mobile station. The code generator 604 then provides such data to the path searcher 606, CPICH/CCPCH signal canceller 607, and the despreaders 608. The path searcher 606, which performs path search based on data symbols in the CPICH detects the time delays, $\hat{\tau}_0, ..., \hat{\tau}_{M-1}$, for several dominant paths or rays and the corresponding instantaneous channel responses, $\hat{\alpha}_0, ..., \hat{\alpha}_{M-1}$. The path searcher 606 then provides such data to the CPICH/CCPCH signal canceller 607 and despreaders 608. Based on the outputs provided by the code generator 604 and path searcher 606, the CPICH/CCPCH signal canceller 607 performs cancellation of the CPICH and CCPCH spread signals from the received signal.

Since information relating to the CPICH and CCPCH is acquired by and known to the mobile station after the cell search and BCH detection, the MMSE optimization criterion may be easily applied to cancel the CPICH and CCPCH spread signals from the received signal. For example, the CPICH may be used to estimate the channel responses, with which the CPICH and CCPCH spread signals may then be cancelled from the received signal.

A CPICH/CCPCH signal cancellation method is described in detail hereinafter. Since data symbols $s_{cp}(k)$ for the CPICH are known to the Rake Receiver 600, data symbols $s_{cc}(k)$ for CCPCH are detectable by the Rake Receiver 600, and spreading codes $c_{cp}(n)$ and $c_{cc}(n)$ for the CPICH and CCPCH, respectively, are known to the Rake Receiver 600, the CPICH/CCPCH signal canceller 607 is able to reconstruct the chip-level components for the CPICH and CCPCH. The reconstructed spread signals, $x_{cp}(n)$ and $x_{cc}(n)$, for the CPICH and CCPCH are as follows:

$$\hat{x}_{cp}(k_1 G + n_1) = \hat{\tilde{x}}_{cp}(k_1; n_1), \; \hat{\tilde{x}}_{cp}(k_1; n_1) = s_{cp}(k_1)c_{cp}(n_1), \; k_1 = 0,1,\ldots, \text{ and } n_1 = 0,\ldots,G-1$$

$$\hat{x}_{cc}(k_1 G + n_1) = \hat{\tilde{x}}_{cc}(k_1; n_1), \; \hat{\tilde{x}}_{cc}(k_1; n_1) = s_{cc}(k_1)c_{cc}(n_1), \; k_1 = 0,1,\ldots, \text{ and } n_1 = 0,\ldots,G-1$$

Also, since the time delay parameter $\hat{p}_m = \lfloor \hat{\tau}_m/T_C \rfloor$ and instantaneous channel responses $\hat{\alpha}_m$ have been detected by path searcher, the CPICH/CCPCH signal canceller 607 is able to remove the CPICH and CCPCH components from the received signal, $y(n)$, thereby a $\tilde{y}(n)$ yielding CPICH/CCPCH-cancelled signal as follows:

$$\tilde{y}(n) = y(n) - \sum_{m=0}^{M-1}\hat{\alpha}_m \hat{x}_{cp}(n - \hat{p}_m) - \sum_{m=0}^{M-1}\hat{\alpha}_m \hat{x}_{cc}(n - \hat{p}_m)$$

If the time delay and instantaneous channel responses are well estimated and the CPICH/CCPCH spread signals are reconstructed accurately, the CPICH/CCPCH-cancelled signal then consists only of the DTCH components, which is:

$$\tilde{y}(n) = \sum_{m=0}^{M-1}\alpha_m \sum_{l=0}^{N-1} x_l(n - p_m)$$

The despreaders 608 then with the CPICH/CCPCH-cancelled signal provided by the CPICH/CCPCH signal canceller 607 and outputs from the code generator 604 and path searcher 606 performs despreading by using the resolved paths obtained by the path searcher 606 based on the CPICH/CCPCH-cancelled signal $\tilde{y}(n)$ provided by the CPICH/CCPCH signal canceller 607 and making use of the time delay and channel estimates earlier obtained. The Rake combiner 610 then coherently combines the despread outputs of the despreaders 608, the output of which is then processed by the signal detector 612.

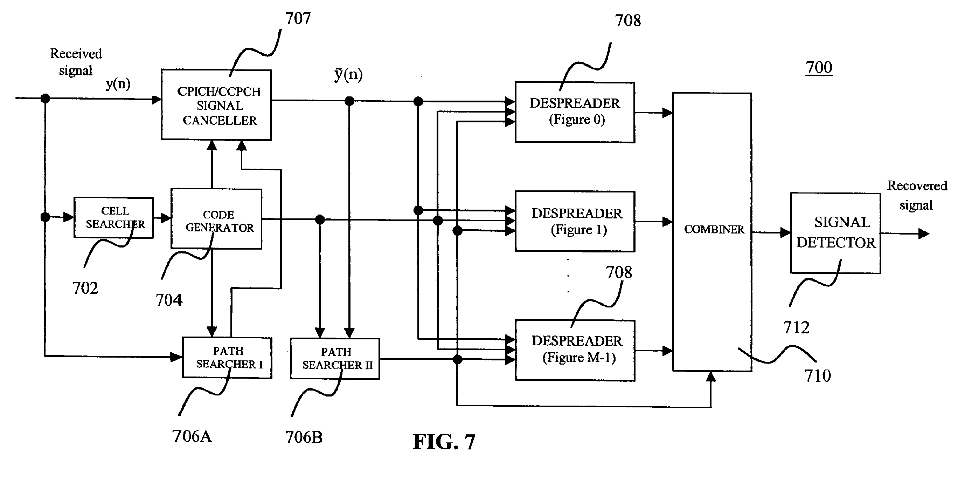

FIG.7 shows a block diagram of a Rake receiver 700 in a mobile station, having a CPICH/CCPCH signal canceller 707 according to a second embodiment of the invention. The Rake receiver 700 consists of two major components, namely the CPICH/CCPCH signal canceller 707, and a Rake combiner 710. Other components include a cell searcher 702, a code generator 704, path searchers I and II 706A and 706B, despreaders 708, and a signal detector 712. The path searcher II 706B and a channel response estimator in the path searcher II 706B or Rake combiner 710 perform path search and channel response estimation, respectively, based on dedicated pilot symbols in a CPICH/CCPCH-cancelled signal pre-processed by the CPICH/CCPCH signal canceller 707. Thus the Rake receiver 700 is well suited for applications where the spread signals in the common channels CPICH and CCPCH and the spread signals in the dedicated channel DTCH are transmitted through different wireless channels.

A received signal $y(n)$ and any corresponding rays are provided to the cell searcher 702 for processing, the output of which is then processed by the code generator 704. The output of the code generator 704 is in turn processed by the path searchers I and II 706A and 706B, CPICH/CCPCH signal canceller 707, and despreaders 708. The output of the path searcher I 706A is provided to the CPICH/CCPCH signal canceller 707 and the output of the path searcher II 706B is provided to the despreaders 708 and Rake combiner 710. The received signal $y(n)$ is also provided to the path searcher I 706A and CPICH/CCPCH signal canceller 707. The cell searcher 702 performs cell search based on the CPICH and CCPCH, and provides parameters relating to slot synchronization, frame synchronization and long scrambling codes. With the long scrambling codes acquired by cell searcher 702, the code generator 704 then generates a combination of long scrambling and short channelization codes, or spreading codes, for the CPICH and CCPCH and the DTCH dedicated to the mobile station. The code generator 704 then provides such data to the path searchers I and II 706A and 706B, CPICH/CCPCH signal canceller 707, and despreaders 708. The path searcher I 706A, which receives the received signal and performs path search based on data symbols in the CPICH detects the time delays, $\hat{\tau}_0, ..., \hat{\tau}_{M-1}$, for several dominant paths or rays and the corresponding instantaneous channel responses, $\hat{\alpha}_0, ..., \hat{\alpha}_{M-1}$. The path searcher I 706A then provides such data to the CPICH/CCPCH signal canceller 707. Based on the parameters provided by the code generator 704 and the path searcher I 706A, the CPICH/CCPCH signal canceller 707 performs cancellation of the CPICH code from the received signal.

Details of the CPICH/CCPCH signal cancellation method described with reference to FIG. 6 is incorporated herein for providing an example of the operation of the CPICH/CCPCH signal canceller 707.

The path searcher II 706B performs path search based on pilot symbols embedded in data symbols in the dedicated DTCH and the CPICH/CCPCH - cancelled signal $\tilde{y}(n)$ provided by the CPICH/CCPCH signal canceller 707. The despreaders 708 then with the CPICH/CCPCH - cancelled signal provided by the CPICH/CCPCH signal canceller 707 and outputs from the code generator 704 and path searcher II 706B perform dispreading by using the resolved paths obtained by the path search II 706B based on the CPICH/CCPCH-cancelled signal provided by the CPICH/CCPCH signal canceller 707 and making use of the time delay and channel estimates earlier obtained. The Rake combiner 710 also provides time alignment for each despread output before combining these outputs. The Rake combiner 710 then coherently combines despread outputs with information provided by the path searcher II 706B, the output of which is then processed by the signal detector 712.

In the frame structure proposed in the 3GPP for the common channel CCPCH, the spread signals in the synchronization channels P-SCH and S-SCH are not processed with long scrambling codes, and thus are not orthogonal to other downlink communication channel spread signals that are processed with long scrambling codes. This non-orthogonality degrades performance relating to the detection of data symbols in the dedicated channel DTCH. However, with CPICH/CCPCH signal cancellation, there is no longer a non-orthogonality problem. Thus the performance relating to the detection of the DTCH data symbols may be greatly improved.

Equalization receiver with CPICH/CCPCH signal cancellation

Alternatively, the CPICH/CCPCH signal cancellation method may be applied to equalization-based CDMA downlink receivers.

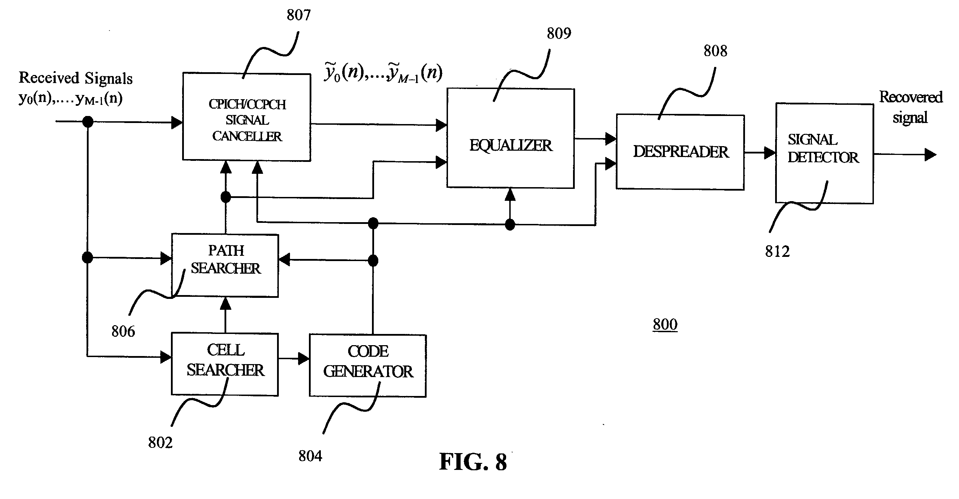

FIG.8 shows a block diagram of an equalization receiver 800 in a mobile station, having a CPICH/CCPCH signal canceller 807 according to a third embodiment of the invention. The equalization receiver 800 consists of two major components, namely the CPICH/CCPCH signal canceller 807 and an equalizer 809. Other components include a cell searcher 802, a code generator 804, a path searcher 806, a despreader 808, and a signal detector 812. The path searcher 806 performs path search and channel response estimation based on data symbols in the common channel CPICH in one or more received signals. Thus the equalization receiver 800 is well suited for applications where spread signals in the common channels CPICH and CCPCH are transmitted together with spread signals in the dedicated channels DTCH.

One or more received signals and any corresponding rays are provided to the cell searcher 802 for processing, the output of which is then processed by the code generator 804 and path searcher 806. The output of the code generator 804 is in turn processed by the path searcher 806, equalizer 809, and despreaders 808. The output of the path searcher 806 is provided to the CPICH/CCPCH signal canceller 807 and equalizer 809. One or more received signals are also provided to the path searcher 806, while all received signals, $y_0(n), ..., y_{M-1}(n)$, are provided to CPICH/CCPCH signal canceller 807. The cell searcher 802 performs cell search based on spread signals in the common channels CPICH and CCPCH, and provides parameters relating to slot synchronization, frame synchronization and long scrambling codes. With the long scrambling codes acquired by the cell searcher 802, the code generator 804 then generates a combination of long scrambling and short channelization codes, or spreading codes, for the CPICH and CCPCH and the DTCH dedicated to the mobile station and other DTCHs required by the equalizer 809. The code generator 804 then provides such data to the path searcher 806, CPICH/CCPCH signal canceller 807, despreader 808, and equalizer 809. The path searcher 806, which performs path search based on data symbols in the CPICH and detects several dominant paths or rays and the corresponding instantaneous channel responses. The path searcher 806 then provides such data to the CPICH/CCPCH signal canceller 807 and equalizer 809. Based on the outputs provided by the code generator 804 and path searcher 806, the CPICH/CCPCH spread signals canceller 807 performs cancellation of the CPICH and CCPCH signal from the received signals, thereby generating CPICH/CCPCH-cancelled signals, $\tilde{y}_0(n), ..., \tilde{y}_{M-1}(n)$.

The CPICH/CCPCH signal canceller 807, code generator 804 and path searcher 806 provide input to the equalizer 809. Details of the CPICH/CCPCH signal cancellation method described with reference to FIG. 6 is incorporated herein for providing an example of the operation of the CPICH/CCPCH signal canceller 807.

In the equalizer 809, there are M chip signals which are the CPICH/CCPCH - cancelled signals $\widetilde{y}_0(n)$, ..., $\widetilde{y}_{M-1}(n)$ and there are $M$ linear finite impulse response (FIR) filters, each of which corresponding to each CPICH/CCPCH - cancelled signal. During operation, each chip signal corresponding to each CPICH/CCPCH-cancelled signal passes into a corresponding FIR filter $g_j(n)$ of length $Q$ thereby yielding an output response $z_j(n)$. A signal combiner in the equalizer 809 then processes these responses into a signal $z(n)$ for further processing by the despreader 808. The path searcher 806 provides reference timing required by the equalizer 809 during operation. The despreader 808 then performs despreading on the equalizer 809 output using spreading codes for the mobile station. The signal detector 812 then uses the despreader 808 outputs to recover data symbols intended for the mobile station.

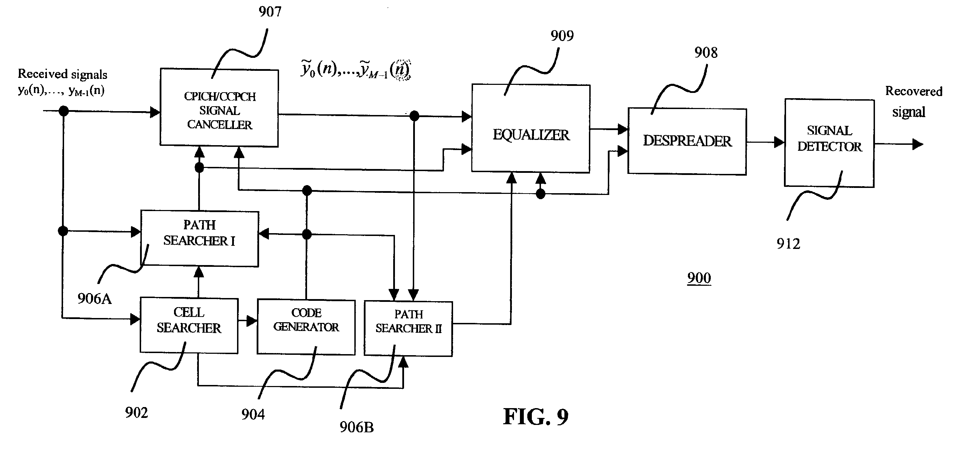

FIG. 9 shows a block diagram of an equalization receiver 900 in a mobile station, having a CPICH/CCPCH signal canceller 907 according to a fourth embodiment of the invention.

The equalization receiver 900 consists of two major components, namely the CPICH/CCPCH signal canceller 907 and an equalizer 909. Other components include a cell searcher 902, a code generator 904, path searchers I and II 906A and 906B, a despreader 908, and a signal detector 912

One or more received signals and any corresponding rays are provided to the cell searcher 902 for processing, the output of which is then processed by the code generator 904, path searcher I 906A and path searcher II 906B. The output of the code generator 904 is in turn processed by the path searchers I and II 906A and 906B, CPICH/CCPCH signal canceller 907, despreaders 808, and equalizer 809. The output of the path searcher I 906A is provided to the CPICH/CCPCH signal canceller 907 and equalizer 909, and the output of the path searcher II 906B is provided to the equalizer 909. One or more received signals are also provided to the path searcher I 906A, while all received signals are provided to the CPICH/CCPCH signal canceller 907. The cell searcher 902 performs cell search based on spread signals in the common channels CPICH and CCPCH, and provides parameters relating to slot synchronization, frame synchronization and long scrambling codes. With the long scrambling codes acquired by the cell searcher 902, the code generator 904 then generates a combination of long scrambling and short channelization codes, or spreading codes, for the CPICH and CCPCH and the DTCH dedicated to the mobile station and other DTCHs required by the equalizer 909. The code generator 904 then provides such data to the path searchers I and II 906A and 906B, CPICH/ CCPCH signal canceller 907, despreader 908, and equalizer 909. The path searcher I 906A, which receives one or more received signals, performs path search based on data symbols in the CPICH and detects several dominant paths or rays and the corresponding instantaneous channel responses. The path searcher I 906A then provides such data to the CPICH/CCPCH signal canceller 907 and equalizer 909. Based on the spreading codes provided by the code generator 904 and time delay and instantaneous channel responses provided by the path searcher I 906A, the CPICH/ CCPCH signal canceller 907 performs cancellation of the CPICH and CCPCH spread signals from the received signals, thereby yielding CPICH/CCPCH - cancelled chip signals, $\widetilde{y}_0(n)$, ..., $\widetilde{y}_{M-1}(n)$.

Details of the CPICH/CCPCH signal cancellation method described with reference to FIG. 6 is incorporated herein for providing an example of the operation of the CPICH/CCPCH signal canceller 907.

The path searcher II 906B receives slot synchronization information from the cell searcher 902 and performs path search and channel response estimation based on pilot symbols embedded in data symbols in the dedicated DTCH and one or more CPICH/CCPCH-cancelled signals providing by the CPICH/CCPCH signal canceller 907.

The CPICH/CCPCH signal canceller 907, code generator 904 and path searcher II 906B provide input to the equalizer 909. In equalizer 909, there are $M$ chip signals which are the CPICH/CCPCH - cancelled outputs, and there are $M$ linear finite impulse response (FIR) filters, each of which corresponding to each CPICH/CCPCH-cancelled signal. During operation, each chip signal corresponding to each CPICH/CCPCH cancelled signal passes into a corresponding FIR filter $g_j(n)$ of length $Q$ thereby yielding an output response $z_j(n)$. A signal combiner in the equalizer 909 then processes these responses into a signal $z(n)$ for further processing by the despreader 908. The path searcher II 906B provides reference timing required by the equalizer 909 during operation. The despreader 908 then performs despreading on the equalizer 909 output using spreading codes for the mobile station. The signal detector 912 then uses the despreader 908 outputs to recover data symbols intended for the mobile station.

When a mobile station is within a soft handover area, two or more base stations may transmit the same set of data symbols to such a mobile station simultaneously. Each base station employs a different set of long scrambling codes, and same or different set of short channelization codes. In the cell search process, the mobile station is able to acquire two or more sets of long scrambling codes relating to the base stations that are close to the mobile station. The mobile station then uses the spreading codes corresponding to each base station to recover data symbols transmitted from that base station. After that, all detected data symbols are finally coherently combined to provide a better detection performance for the mobile station.

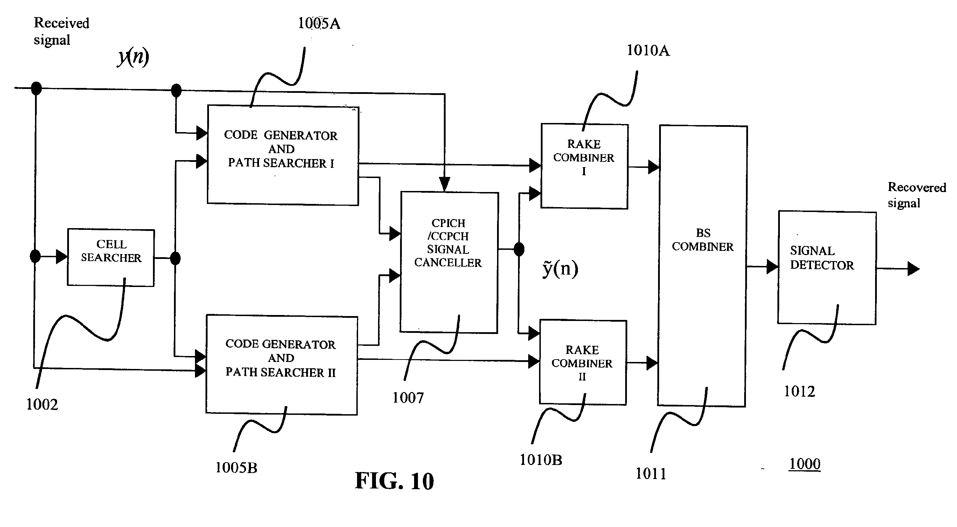

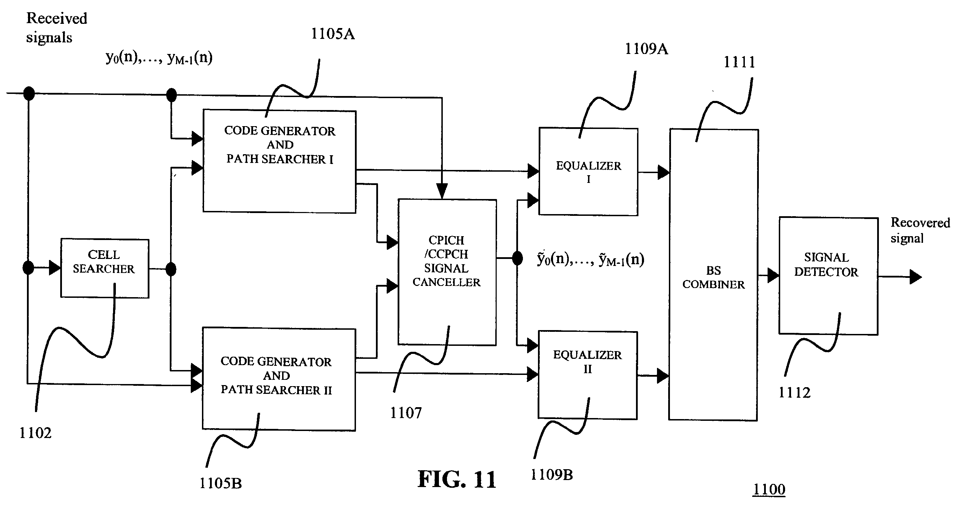

The CPICH/CCPCH signal cancellation method may also be applied in the foregoing soft handover scenario. For purposes of exemplifying such an application, operations where two base stations 0 and 1 connecting with a mobile station are described with reference to Figs. 10 and 11.

FIG.10 shows a block diagram of a Rake receiver 1000 in a mobile station, having a CPICH/CCPCH signal canceller for soft handover applications according to a fifth embodiment of the invention. The Rake receiver 1000 consists of a cell searcher 1002, a code generator and path searcher I 1005A for a base station 0, a Rake combiner I 1010A for the base station 0, a code generator and path searcher II 1005B for a base station 1, Rake combiner II 1010A for the base station 1, a CPICH/CCPCH canceller 1007, a base station (BS) combiner 1011 and a signal detector 1012.

A received signal $y(n)$ and any corresponding rays are provided to the cell searcher 1002 for processing, the output of which is then processed by the code generator and path searcher I 1005A for the base station 0 (BS0) and the code generator and path searcher II 1005B for the base station 1 (BS1). The output of the code generator and path searcher I 1005A is provided to the CPICH/CCPCH signal canceller 1007 and Rake combiner I 1010A, while the output of the code generator and path searcher II 1005B is provided to the CPICH/CCPCH signal canceller 1007 and Rake combiner II 1010B. The received signal $y(n)$ is also provided to the code generators and path searchers I and II 1005A and 1005B and the CPICH/CCPCH signal canceller 1007. The cell searcher 1002 performs cell search based on spread signals in the common channels CPICH and CCPCH, and provides parameters relating to slot synchronization, frame synchronization and long scrambling codes of two base stations BS0 and BS1. A typical slot synchronization parameter is the time delay for the first arrived ray for each base station. The code generator and path searcher I 1005A generates a combination of long scrambling codes and short channelization codes, or spreading codes, for the CPICH and CCPCH and the DTCH dedicated to the mobile station in relation to the BS0, and performs path search based on data symbols in the CPICH, and detects the time delays for several dominant paths or rays and the corresponding instantaneous channel responses from the BS0 to the mobile station. The code generator and path searcher II 1005B generates a combination of long scrambling codes and short channelization codes, or spreading codes, for the CPICH and CCPCH and the DTCH dedicated to the mobile station in relation to the BS1, and performs path search based on data symbols in the CPICH, and detects the time delays for several dominant paths or rays and the corresponding instantaneous channel responses from the BS1 to the mobile station. Based on the outputs provided by the code generator and path searcher I 1005A and code generator and path searcher II 1005B, the CPICH/CCPCH signal canceller 1007 performs cancellation of the CPICH and CCPCH spread signals from both base stations using the received signal. The CPICH/CCPCH-cancelled signal is then passed to the Rake combiner I 1010A and Rake combiner II 1010B. The BS combiner coherently combines the outputs from the Rake combiner I 1010A and Rake combiner II 1010B, the output of which is provided to the signal detector 1012. The signal detector 1012 then recovers data symbols in the dedicated DTCH from the BS combiner 1011 output.

Since information relating to the common channels CPICH and CCPCH is acquired by and known to the mobile station after the cell search and BCH detection, the MMSE criterion may be easily applied to cancel the CPICH and CCPCH spread signals from the received signal. For example, the CPICH may be used to estimate the channel responses, with which the CPICH and CCPCH spread signals may then be cancelled from the received signal.

A CPICH/CCPCH signal cancellation method for soft handover application is described in detail hereinafter. The transmitted signals from each base station $x^{(1)}(n)$ and $x^{(2)}(n)$ may be expressed as:

$$x^{(1)}(n) = \sum_{l=0}^{N-1} x_l^{(1)}(n) + x_{cp}^{(1)}(n) + x_{cc}^{(1)}(n)$$

$$x^{(2)}(n) = \sum_{l=0}^{N-1} x_l^{(2)}(n) + x_{cp}^{(2)}(n) + x_{cc}^{(2)}(n)$$

where $x_{cp}^{(m)}(n)$, $x_{cc}^{(m)}(n)$ and $x_l^{(m)}(n)$ are spread signals in the CPICH, CCPCH and an $l$th user, respectively, corresponding to an $m$th base station ($m$ = 1,2). The spread signals $x_{cp}^{(m)}(n)$, $x_{cc}^{(m)}(n)$ and $x_l^{(m)}(n)$ are obtained by spreading data symbols, $s_{cp}^{(m)}(k)$, $s_{cc}^{(m)}(k)$ and $s_l^{(m)}(k)$, with the corresponding spreading codes, which are the combination of long scrambling codes and short channelization codes, for the $m$th base station. For soft handover applications, the $0$th DTCHs of both base stations dedicated to the mobile station are used to carry the same data symbols $s_0(k)$ to the mobile station.

The channel responses from each base station to the mobile station are respectively

$$h^{(1)}(t;\tau) = \sum_{m=0}^{M^{(1)}-1} \alpha_m^{(1)}(t)\delta(\tau - \tau_m^{(1)})$$

$$h^{(2)}(t;\tau) = \sum_{m=0}^{M^{(1)}-1} \alpha_m^{(2)}(t)\delta(\tau - \tau_m^{(2)})$$

where

$$\tilde{\alpha}_m^{(k)}(t)$$

and $\tau^{(k)}{}_m$ are the path gain and time delay of the $m$th path, respectively, from the $k$th base station with

$$\sum_{m=0}^{M^{(k)}-1} E\left[\left|\tilde{\alpha}_m^{(k)}(t)\right|^2\right] = 1,$$

and $m^{(k)}$ is the number of resolved rays from the $k$th base station to the mobile station.

The channel responses are constant within the observation interval,

$$\tilde{\alpha}_m^{(k)}(t) = \alpha_m^{(k)}.$$

The received signal is expressed as:

$$y(n) = \sum_{m=0}^{M^{(1)}-1} \alpha_m^{(1)} x(n - p_m^{(1)}) + \sum_{m=0}^{M^{(2)}-1} \alpha_m^{(2)} x(n - p_m^{(2)})$$

where $p^{(1)}_m = \lfloor \tau^{(1)}_m / T_c \rfloor$ and $p^{(2)}_m = \lfloor \tau^{(2)}_m / T_c \rfloor$.

The mobile station is then required to recover the $0^{th}$ DTCH's data symbols $s_0(k)$.

Since the data symbols in the CPICH and CCPCH of the two base stations are detectable by the Rake receiver 1000 and the spreading codes for the CPICH and CCPCH are acquired by the Rake receiver 1000, the CPICH/CCPCH signal canceller 1007 is able to reconstruct the chip-level components for the CPICH and CCPCH of the two base stations in which $x^{(k)}_{cp}(n)$ and $x^{(k)}_{cc}(n)$ are the reconstructed spread signals in the CPICH and CCPCH corresponding to the $k$th base station. Also, since the time delay parameter, $\hat{p}^{(k)}_m = \lfloor \hat{\tau}^{(k)}_m / T_c \rfloor$, and instantaneous channel responses, $\hat{\alpha}^{(k)}_m$, have been detected by the code generators and path searchers I and II 1005A and 1005B or channel response estimators in the path searchers or Rake combiners, the CPICH/CCPCH signal canceller 1007 is able to remove the CPICH and CCPCH components from the received signal $y(n)$ yielding a CPICH/CCPCH - cancelled signal

$$\tilde{y}(n)$$

as follows:

$$\tilde{y}(n) = y(n) - \sum_{m=0}^{M^{(1)}-1} \hat{\alpha}_m^{(1)} \hat{x}_{cp}^{(1)}(n - \hat{p}_m^{(1)}) - \sum_{m=0}^{M^{(1)}-1} \hat{\alpha}_m^{(1)} \hat{x}_{cc}^{(1)}(n - \hat{p}_m^{(1)}) - \sum_{m=0}^{M^{(2)}-1} \hat{\alpha}_m^{(2)} \hat{x}_{cp}^{(2)}(n - \hat{p}_m^{(2)}) - \sum_{m=0}^{M^{(2)}-1} \hat{\alpha}_m^{(2)} \hat{x}_{cp}^{(2)}(n - \hat{p}_m^{(2)})$$

If the time delay and instantaneous channel responses are well estimated and the CPICH/CCPCH spread signals are reconstructed accurately, the CPICH/CCPCH-cancelled signal then consists only of the DTCH components from both base stations. That is to say,

$$\widetilde{y}(n) = \sum_{m=0}^{M^{(1)}-1} \alpha_m^{(1)} \sum_{l=0}^{N-1} x_l^{(1)}(n - p_m^{(1)}) + \sum_{m=0}^{M^{(2)}-1} \alpha_m^{(2)} \sum_{l=0}^{N-1} x_l^{(2)}(n - p_m^{(2)})$$

In this case, the CPICH/CCPCH-cancelled signals may be used to recover data symbols embedded in the dedicated DTCH from each base station.

FIG. 11 shows a block diagram of an equalizer receiver 1100 in a mobile station, having a CPICH/CCPCH signal canceller 1107 for soft handover applications according to a sixth embodiment of the invention. The equalization receiver 1100 consists of cell a searcher 1102, a code generator and path searcher I 1105A for a base station 0, an equalizer I 1109A for the base station 0, a code generator and path searcher II 1105B for a base station 1, an equalizer II 1109B for the base station 1, the CPICH/CCPCH canceller 1107, a base station (BS) combiner 1111, and a signal detector 1112.

One or more received signals $y_0(n),..., y_{M-1}(n)$ and any corresponding rays are provided to the cell searcher 1102 for processing, the output of which is then processed by the code generator and path searcher I 1105A for base station 0 (BS0) and the code generator and path searcher II 1105B for the base station 1 (BS1). The output of the code generator and path searcher I 1105A is provided to the CPICH/CCPCH signal canceller 1107 and equalizer I 1109A, while the output of the code generator and path searcher II 1105B is provided to the CPICH/CCPCH signal canceller 1107 and equalizer II 1109B. The received signals $y_0(n),..., y_{M-1}(n)$ are also provided to the code generators and path searchers I and II 1105A and 1105B and the CPICH/CCPCH signal canceller 1107. The cell searcher 1102 performs cell search based on spread signals in the common channels CPICH and CCPCH, and provides parameters relating to slot synchronization, frame synchronization and long scrambling codes of the two base stations BS0 and BS1. A typical slot synchronization parameter is the time delay for the first arrived ray for each base station. The code generator and path searcher I 1105A generates a combination of long scrambling codes and short channelization codes, or spreading codes, for the CPICH and CCPCH and the DTCH dedicated to the mobile station in relation to the BS0, and performs path search based on data symbols in the CPICH and detects the time delays for several dominant paths or rays and the corresponding instantaneous channel responses from the BS0 to the mobile station. The code generator and path searcher II 1150B generates a combination of long scrambling codes and short channelization codes, or spreading codes, for the CPICH and CCPCH and the DTCH dedicated to the mobile station in relation to the BS 1, and performs path search based on the data symbols in CPICH, and detects the time delays for several dominant paths or rays and the corresponding instantaneous channel responses from the BS1 to the mobile station. Based on the outputs provided by the code generator and path searcher I 1105A and code generator and path searcher II 1105B, the CPICH/CCPCH signal canceller 1107 performs cancellation of the CPICH and CCPCH spread signals from both base stations using the received signal. The CPICH/CCPCH - cancelled signal is then passed to the equalizer I 1109A and equalizer II 1109B. The BS combiner 1111 coherently combines the outputs from the equalizer I 1109A and equalizer II 1109B. The signal detector 1112 then recovers data symbols in the dedicated DTCH from the BS combiner 1111 output.

Details of the CPICH/CCPCH signal cancellation method for soft handover application described with reference to FIG. 10 is incorporated herein for providing an example of the operation of the CPICH/CCPCH canceller 1107.

Mini-Max equalization with CPICH/CCPCH code cancellation

Further embodiments of the invention are described hereinafter in relation to the Mini-Max symbol equalizer based on the constrained minimum output energy criterion.

The conventional Mini-Max equalization technique is based on the criterion that, with perfect ZF equalization, despreading using spreading codes of a mobile station should recover the mobile station data symbols, while the result of despreading using any unused spreading codes should be null. Therefore, the technique involves the generation of equalization coefficients by minimizing the total power of despread outputs based on the unused spreading codes, and maximizing the power of the despread output based on the spreading codes of the mobile station.

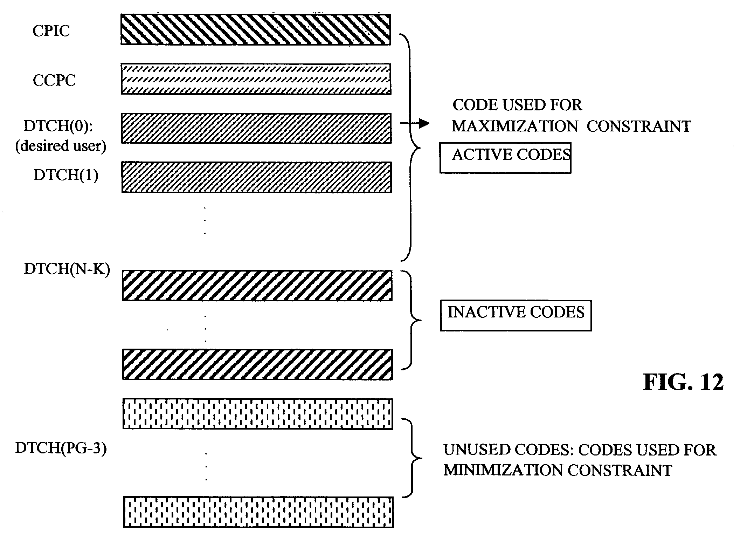

Spreading codes used in relation to the conventional Mini-Max equalization technique are shown in FIG.12. With reference to FIGS. 12 to 15, the term "codes" refer to short channelization codes since long scrambling codes are common to all mobile stations within the same cell or sector. The used codes, which are designed for use when required in mobile stations for despreading, and unused codes, which are not used at all by any mobile stations for despreading, form the whole set of orthogonal codes in a cell or sector. The used codes consist of active codes inclusive of codes assigned to the common channels CPICH and CCPCH and codes assigned to active mobile stations, and inactive codes assigned to inactive mobile stations. The codes used in relation to a maximization constraint consist of the active codes assigned to the common channels and active mobile stations, while the codes used in relation to a minimization constraint consist of the unused codes. The mobile stations with conventional Mini-Max equalizers need to acquire information relating to the unused codes, which is not only difficult, but also impossible when the CDMA downlink transmission system is fully loaded, since there are no unused codes in that case.

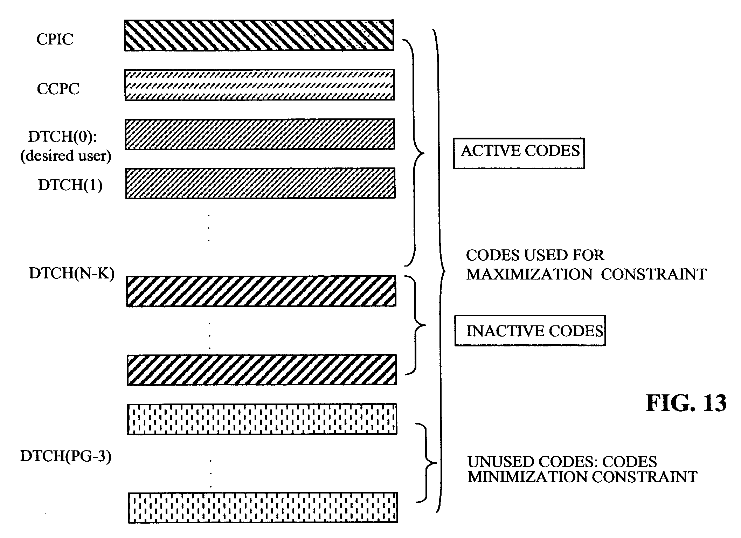

An enhanced Mini-Max equalization technique involves the minimization of the total power of the despread outputs from the unused codes, and maximization of the total power from all orthogonal codes. The codes used in relation to the enhanced Mini-Max equalization technique are shown in FIG.13, in which the codes relating to the minimization constraint are the unused codes while the codes relating to the maximization constraint are all orthogonal codes. With this minimization constraint, IFI may be minimized, as well as the power for the undesired path, while with all orthogonal codes relating to the maximization constraint, the power for the desired path is maximised. With the use of all short channelization codes for the maximization constraint, an enhanced Mini-Max equalizer possesses a higher working SNR than a conventional Mini-Max equalizer. The enhanced Mini-Max equalizer thus yields better ZF equalization results than the conventional Mini-Max equalizer, especially when the transmitted power for the mobile station is much weaker than that for other mobile stations.

A Mini-Max equalizer according to a seventh embodiment of the invention employs a combination of the CPICH/CCPCH signal cancellation method described with reference to Fig. 6 and the enhance Mini-Max equalization receiver. With CPICH/CCPCH signal cancellation, the codes assigned to the CPICH and CCPCH are thus considered as unused codes.

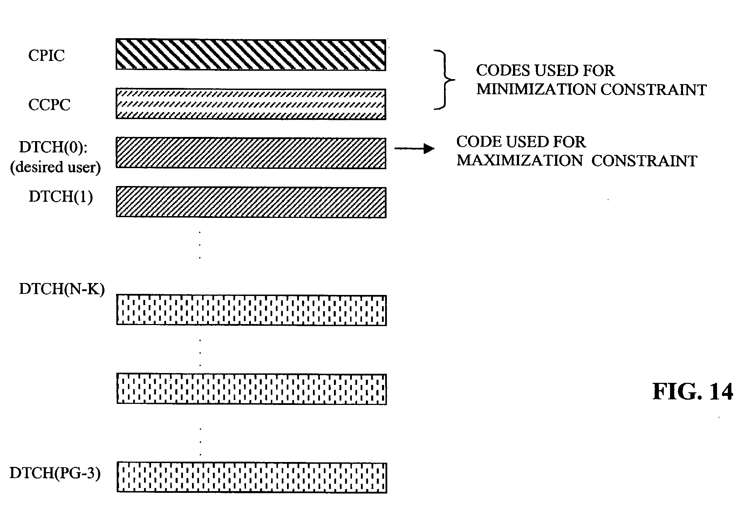

FIG.14 shows codes used in the conventional Mini-Max equalization technique employed in the equalizer receiver with CPICH/CCPCH signal cancellation. The codes relating to the maximization constraint are the codes assigned to the mobile station, while those relating to the minimization constraint are the codes assigned to the CPICH and CCPCH.

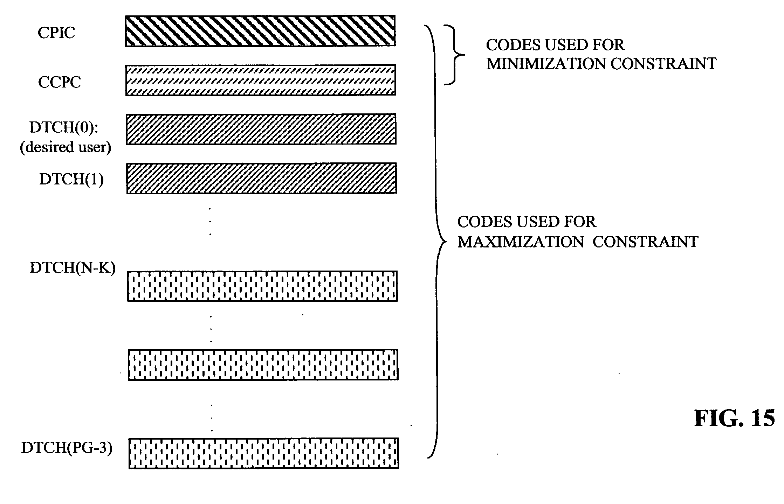

FIG.15 shows codes used in the enhanced Mini-Max equalization technique employed in the equalizer receiver with CPICH/CCPCH signal cancellation. The codes relating to the maximization constraint are all orthogonal codes, while those relating to the minimization constraint are the codes assigned to the CPICH and CCPCH. This is common for all users within the same cell or sector, and may be used to simplify the complexity of the receiver structure.

When transmission diversity is used at the base station, multiple Mini-Max equalizers employing the improved Mini-Max equalization technique and/or CPICH/CCPCH code cancellation may also be applied with the help of multiple antennas.

Computer simulations

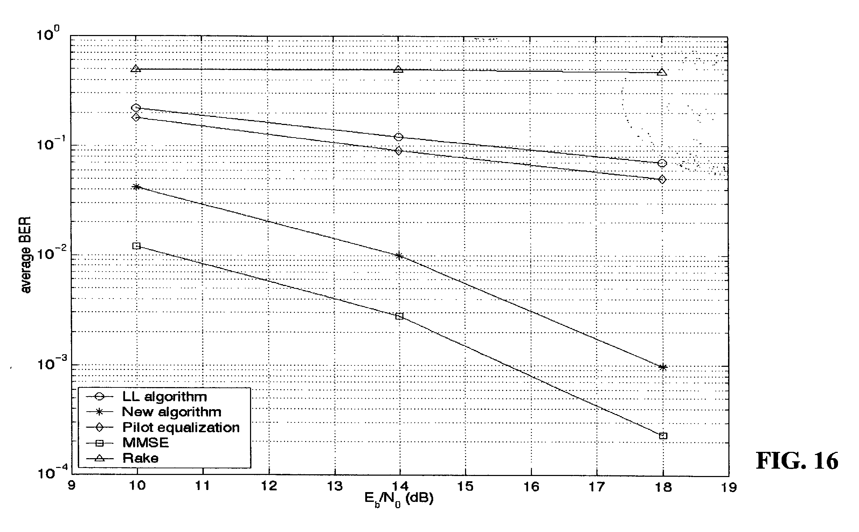

Computer simulation and results therefrom are described hereinafter for comparing the various equalization techniques with reference to FIG. 16. A DS-CDMA downlink transmission is simulated with Walsh codes of length 16 (PG = 16). Binary phase shift keying (BPSK) random codes are used as long scrambling codes. The codes for the common channel CPICH and dedicated channel DTCH for a mobile channel occupy the first and second sets of codes. The total number of mobile stations, including the CPICH, is denoted as K. Each slot consists of four quadrature phase shift keying (QPSK) pilot symbols and 60 QPSK informational data symbols. 1000 slots are transmitted to evaluate the average BER performance, each of which possesses an independent set of static fading channels. The four pilot symbols are used to recover the phase information for coherent detection.

In the computer simulations, the background noise spectrum density N0 of the mobile station is first fixed, followed by varying the transmitted powers for different channels such that the transmitted Eb/N0 for the CPICH code is 33 dB, and the transmitted Eb/N0 for other DTCH codes are all 30 dB. The transmitted power for the dedicated DTCH code is varied according to the Eb/N0 values. The path gain for the mobile station is 1. The reason for choosing such high transmitted powers for the CPICH code and other DTCH codes is that it is an objective to determine the robustness of the enhanced Mini-Max equalization technique in relation to the near-far problem. In fact, the average received Eb/N0 for the mobile stations close to the cell boundary may be very small.

Two reception antennas are used to acquire transmitted signals. Each channel follows a three-path model, each path is delayed by one chip, and modeled as an independent Rayleigh fading channel. Received signals are first passed to two linear finite-impulse-response (FIR) equalizers, followed by a combiner, and in turn followed by a despreader.

It is assumed that the CPICH and other DTCH codes are transmitted through different channels. To achieve this, all DTCH codes are assumed to be transmitted through the same physical channel, while for the CPICH code, the channel responses are same as those for DTCH codes, except that the first tap coefficient has 180 degree phase difference from that of DTCH codes.

The following equalization techniques are compared:

1. Mini-Max algorithm proposed by Li and Liu (LL algorithm) in a paper entitled "A new blind receiver for downlink DS-CDMA communications", IEEE Communications Letters, vol.3, No.7, pp.193-195, July 1999;

2. Pilot-aided symbol equalization (Pilot equalization) proposed by F. Petre, M. Moonen, M. Engels, B. Gyselinckx and H. Man in a paper entitled "Pilot-aided adaptive chip equalizer receiver for interference suppression in DS-CDMA forward link", Proc. of VTC-Fall'2000, 2000, in which a pilot channel is used to update the equalization coefficients, which are then used to equalize the dedicated channel;

3. Rake receiver (Rake), where the performance of the Rake receiver is used for comparison;

4. Improved Mini-Max equalization algorithm with CPICH code cancellation (New algorithm), in which all codes are used to construct the maximization constraint, while the short channelization codes assigned to the CPICH is used for minimization constraint; and

5. Dedicated channel MMSE equalization (MMSE), in which a dedicated channel is equalized using MMSE criterion assuming the data for the dedicated channel is known completely, where the BER performance of this method serves as the lowest boundary for comparison purpose.

To evaluate the performance of the CPICH signal cancellation and improved Mini-Max techniques simultaneously, K is set at 16, i.e., the CDMA downlink transmission system is fully loaded. In this case, the LL algorithm is not applicable since there are no unused codes. However, with the CPICH signal cancellation technique, the channelization code for the CPICH is used as an unused code, thus the new algorithm is still applicable to the CDMA downlink transmission system.

FIG.16 shows the average BER performance with respect to the transmitted Eb/N0 of the mobile station for different algorithms. The following is observed from the simulation results shown in FIG. 16:

1. Due to the strong interference, the Rake receiver completely fails to work;

2. Since the CPICH and other DTCH codes are transmitted through different physical channels, the pilot equalization method does not provide good equalization for the DTCH code;

3. The LL algorithm fails to work since there are no unused codes available; and

4. Even though the CDMA downlink transmission system is fully loaded, the new algorithm is still applicable to CDMA downlink transmission system.

In the foregoing manner, receiver structures and methods for CDMA downlink transmission, namely Rake receivers with CPICH/CCPCH signal cancellers, equalization receivers with CPICH/CCPCH signal cancellers, and Mini-Max equalization technique applying CPICH/CCPCH signal cancellation are described for addressing the need for achieving power savings, capacity enhancement, and throughput increment for CDMA downlink transmission. Although only a number of embodiments of the invention are disclosed, it will be apparent to one skilled in the art in view of this disclosure that numerous changes and/or modification can be made without departing from the scope and spirit of the invention.

In view of the foregoing description of particular embodiments of the invention it will be appreciated by a person skilled in the art that various additions, modifications and alternatives thereto may be envisaged.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

For the avoidance of doubt, the term "comprising" used in the description and claims should not be construed to mean only "consisting only of".

## Claims

**1.** A code division multiple access downlink receiver for providing wireless communication between a base station and a mobile station in which the receiver is implemented, the receiver comprising:

a cell searcher for receiving at least one signal from the base station and retrieving therefrom a common code relating to a cell;

a code generator for generating a set of common and dedicated codes relating to at least one communication channel using the output of the cell searcher;

a first path searcher for receiving the at least one signal and performing a search for multiple paths by which the at least one signal arrives at the receiver; and

a canceller for canceling data in the at least one communication channel from the at least one signal based on the output of the code generator and first path searcher.

2. The receiver as in claim 1, wherein the canceller removes the data in the at least one communication channel from the at least one signal.

3. The receiver as in claim 2, wherein the canceller reconstructs the data in the at least one communication channel based on the output of the code generator and first path searcher.

4. The receiver as in claim 3 wherein the canceller applies the minimum mean-square-error optimization criterion.

5. The receiver as in claim 4, wherein the canceller uses channel responses obtained by the receiver in relation to the multiple paths by which the at least one signal arrives at the receiver.

6. The receiver as in claim 1, wherein the at least one communication channel is a common channel in the cell.

7. The receiver as in claim 1, further comprising a channel response estimator for estimating channel responses in relation to the multiple paths by which the at least one signal arrives at the receiver.

8. The receiver as in claim 7, wherein the first path searcher performs the search for multiple paths and estimate channel responses therefor based on the at least one communication channel.

9. The receiver as in claim 8, further comprising a second path searcher for receiving the output of the canceller and performing a search for multiple paths therewith.

10. The receiver as in claim 1, further comprising at least one despreader for receiving the outputs of the canceller and code generator for dispreading the output of the canceller.

11. The receiver as in claim 10, further comprising a Rake combiner for receiving the output of the at least one despreader and combing the despread output.

12. The receiver as in claim 1, further comprising an equalizer for receiving the output of the canceller and code generator for equalizing the output of the canceller.

13. The receiver as in claim 12, further comprising a despreader for receiving the output of the equalizer for despreading the output of the equalizer.

14. The receiver as in claim 13, wherein the equalizer generates equalization coefficients based on the minimization of the total power of the despread output in relation to unused dedicated codes and maximization of the power of the despread output in relation to a dedicated code relating to the mobile station.

15. The receiver as in claim 14, wherein the equalizer generates the equalization coefficients based on the minimization of the power of the despread output in relation to a dedicated code relating to the at least one communication channel.

16. The receiver as in claim 13, wherein the equalizer generates equalization coefficients based on the minimization of the total power of the despread output in relation to unused dedicated codes and maximization of the total power of the despread output in relation to all orthogonal dedicated codes in the cell.

17. The receiver as in claim 16, wherein the equalizer generates the equalization coefficients based on the minimization of the power of the despread output in relation to a dedicated code relating to the at least one communication channel.

18. A code division multiple access downlink reception method for providing wireless communication between a base station and a mobile station in which a receiver employing the method is implemented, the method comprising the steps of:

receiving using a cell searcher at least one signal from the base station and retrieving therefrom a common code relating to a cell;

generating using a code generator a set of common and dedicated codes relating to at least one communication channel using the output of the cell searcher;

receiving using a first path searcher the at least one signal and performing a search for multiple paths by which the at least one signal arrives at the receiver;

canceling using a canceller data in the at least one communication channel from the at least one signal based on the output of the code generator and first path searcher;

receiving using an equalizer the output of the canceller and code generator for equalizing the output of the canceller; and

receiving using a despreader the output of the equalizer for despreading the output of the equalizer.

19. The method as in claim 18, wherein the step of equalizing using the equalizer comprises the step of generating equalization coefficients based on the minimization of the total power of the despread output in relation to unused dedicated codes and maximization of the power of the despread output in relation to a dedicated code relating to the mobile station, including the minimization of the power of the despread output in relation to a dedicated code relating to the at least one communication channel.

20. The method as in claim 18, wherein the step of equalizing using the equalizer comprises the step of generating equalization coefficients based on the minimization of the total power of the despread output in relation to unused dedicated codes and maximization of the total power of the despread output in relation to all orthogonal dedicated codes in the cell, including the minimization of the power of the despread output in relation to a dedicated code relating to the at least one communication channel.

**FIG. 1**

CPICH

CCPCH

DTCH(0)

DTCH(1)

DTCH(N-1)

102

Spreader LC*C(0;n)

Spreader LC*C(1;n)

Spreader LC*C(2;n)

Spreader LC*C(3;n)

Spreader LC*C(N+1;n)

108

104

106

106

106L    Transmitter

107

Wireless channel

Received signal

Receiver

EP 1 304 815 A2

**FIG. 2**

FIG. 3

Received signals from
multiple antennas
/oversampling

**FIG. 4**

EP 1 304 815 A2

**FIG. 5**

Received signal from channel 0
$X0(n)$ → [502A: $g0(n)$] → $z_1(n)$

Received signal from channel 1
$X1(n)$ → [502B: $g1(n)$] → $z_2(n)$

Received signal from channel M-1
$XM-1(n)$ → [$gM-1(n)$] → $z_{M-1}(n)$

→ Σ (504) → $Z(n)$

EP 1 304 815 A2

**FIG. 6**

EP 1 304 815 A2

FIG. 7

FIG. 8

EP 1 304 815 A2

Received signals
$y_0(n), \ldots, y_{M-1}(n)$

907 — CPICH/CCPCH SIGNAL CANCELLER

$\tilde{y}_0(n), \ldots, \tilde{y}_{M-1}(n)$

909 — EQUALIZER

908 — DESPREADER

912 — SIGNAL DETECTOR

Recovered signal

906A — PATH SEARCHER I

902 — CELL SEARCHER

904 — CODE GENERATOR

906B — PATH SEARCHER II

900

FIG. 9

**FIG. 10**

**FIG. 11**

Received signals
$y_0(n), \ldots, y_{M-1}(n)$

1105A

1109A

1111

CELL SEARCHER

CODE GENERATOR AND PATH SEARCHER I

CPICH /CCPCH SIGNAL CANCELLER

EQUALIZER I

$\tilde{y}_0(n), \ldots, \tilde{y}_{M-1}(n)$

BS COMBINER

SIGNAL DETECTOR

Recovered signal

CODE GENERATOR AND PATH SEARCHER II

EQUALIZER II

1102

1105B

1107

1109B

1112

1100

EP 1 304 815 A2

CPIC

CCPC

DTCH(0):
(desired user)

DTCH(1)

⋮

DTCH(N-K)

⋮

DTCH(PG-3)

⋮

CODE USED FOR
MAXIMIZATION CONSTRAINT

ACTIVE CODES

INACTIVE CODES

FIG. 12

UNUSED CODES: CODES USED FOR
MINIMIZATION CONSTRAINT

EP 1 304 815 A2

CPIC

CCPC

DTCH(0):
(desired user)

DTCH(1)

ACTIVE CODES

CODES USED FOR
MAXIMIZATION CONSTRAINT

DTCH(N-K)

INACTIVE CODES

DTCH(PG-3)

UNUSED CODES: CODES
MINIMIZATION CONSTRAINT

**FIG. 13**

EP 1 304 815 A2

CPIC

CCPC

} CODES USED FOR
MINIMIZATION CONSTRAINT

DTCH(0):
(desired user) → CODE USED FOR
MAXIMIZATION CONSTRAINT

DTCH(1)

.
.
.

DTCH(N-K)

.
.
.

.
.
.

DTCH(PG-3)

**FIG. 14**

CPIC

CCPC

} CODES USED FOR
MINIMIZATION CONSTRAINT

DTCH(0):
(desired user)

DTCH(1)

CODES USED FOR
MAXIMIZATION CONSTRAINT

DTCH(N-K)

DTCH(PG-3)

FIG. 15

**FIG. 16**